# EUROPEAN PATENT APPLICATION

(11) **EP 4 826 775 A1**
(43) Date of publication of application: **21.10.2026**
(21) Application number: 24904255.7
(22) Date of filing: 10.12.2024
(51) Int. Cl.: H01M 4/134, H01M 4/1395

(54) **LITHIUM METAL ELECTRODE FOR LITHIUM SECONDARY BATTERY, AND METHOD OF MANUFACTURING SAME**

(30) Priority: 11.12.2023 KR 20230178687
(71) Applicant: POSCO Holdings Inc., Pohang-si, Gyeongsangbuk-do 37859 (KR)
(72) Inventor: BAE, Hongyeul, Pohang-si, Gyeongsangbuk-do 37859 (KR); KIM, Jin Hong, Pohang-si, Gyeongsangbuk-do 37859 (KR); LEE, Garam, Pohang-si, Gyeongsangbuk-do 37859 (KR); BAE, Weon Soo, Pohang-si, Gyeongsangbuk-do 37859 (KR); LEE, Sang Lag, Pohang-si, Gyeongsangbuk-do 37859 (KR)
(74) Representative: Pfenning, Meinig & Partner mbB
(86) International application number: PCT/KR2024/020221
(87) International publication number: WO 2025/127690

(57) **Abstract**

The present invention relates to a lithium metal electrode and a method for preparing the same. The lithium metal electrode of the present invention may include a current collector, a metal layer positioned on at least one surface of the current collector and including a lithium alloy, and a protective layer positioned on the metal layer, wherein the protective layer may include amorphous carbon and a silicate clay mineral having a 2:1 layered crystal structure.

## Description

### [TECHNICAL FIELD]

The present invention relates to a lithium secondary battery, and more particularly, to a lithium metal electrode for a lithium secondary battery and a method for preparing the same.

### [BACKGROUND ART]

For cost reduction and high energy density of secondary batteries, it is indispensable to use a lithium metal electrode as a negative electrode of a lithium secondary battery. Specifically, recently, an all-solid-state battery has attracted attention as a next-generation battery for high energy density, such as for electric vehicle (EV) applications.

Since an all-solid-state battery does not use a liquid electrolyte, it has advantages in various aspects, such as excellent stability, capability of high-voltage operation, improved energy density of a battery pack due to reduction of cooling and safety-related auxiliary materials, and operability in a wide temperature range. In order to substantially realize high energy density in such an all-solid-state battery, a thick and low-capacity graphite-based negative electrode material should be replaced with thin and high-capacity lithium, and in view of economic efficiency and energy density, a thin-film lithium metal electrode having a thickness of substantially 10 µm to 20 µm is required.

In general, in order to form a lithium metal electrode, a method of rolling copper foil, which is a current collector, and lithium foil, or a method of depositing a lithium thin film on copper foil has been used. However, rolling has disadvantages in that it is difficult to achieve a wide width and a thin film, and deposition has a disadvantage of low economic efficiency. In order to solve these disadvantages, a method of forming a negative electrode by electrodepositing lithium on copper foil using an electrochemical method has been proposed.

However, when a lithium metal electrode is used as a negative electrode in an all-solid-state battery, a high-resistance phase is generated by a reaction between lithium and an all-solid-state electrolyte, and lithium dendrites are continuously generated due to local non-uniformity of current density during charge and discharge, or high-resistance lithium by-products are generated. As a result, problems occur in that the battery fails to perform its function due to short circuit or overvoltage during charge and discharge, or capacity is reduced.

To date, various methods have been proposed in which amorphous carbon is used alone as a protective coating layer on a lithium metal electrode, or a composite material with an expensive lithiophilic metal is used, in order to prevent reaction with an all-solid-state battery and prevent precipitation growth of lithium dendrites. However, sufficient lithium deposition rate and charge/discharge lifespan characteristics have not been obtained.

### [DETAILED DESCRIPTION OF THE INVENTION]

### [Technical Problem]

A lithium metal electrode for a lithium secondary battery according to an embodiment of the present invention is intended to increase the concentration of lithium ions, thereby improving a lithium deposition rate and realizing a lithium secondary battery having improved charge/discharge lifespan characteristics.

A method for preparing a lithium metal electrode for a lithium secondary battery according to another embodiment of the present invention is intended to provide a method for preparing a lithium metal electrode for a lithium secondary battery having the above-described advantages.

### [Technical Solution]

A lithium metal electrode according to an embodiment of the present invention includes a current collector, a metal layer positioned on at least one surface of the current collector and including a lithium alloy, and a protective layer positioned on the metal layer, wherein the protective layer includes amorphous carbon and a silicate clay mineral having a 2:1 layered crystal structure.

In an embodiment, the protective layer may have a weight ratio of the amorphous carbon to the silicate clay mineral of 97:3 to 65:35. In an embodiment, the silicate clay mineral may include monoclinic crystals.

In an embodiment, the silicate clay mineral may have a layer charge per unit cell of 0.2 to 0.6. In an embodiment, the silicate clay mineral may have a cation exchange capacity (me/100 g) of 80 to 150.

In an embodiment, a bonding strength between the current collector and the protective layer may be 0.030 N/cm to 0.30 N/cm. In an embodiment, the metal layer including the lithium alloy may include one or more of In, Ag, Sn, Zn, Si, Al, and Bi.

In an embodiment, an average thickness of the metal layer may be 1 µm to 100 µm. In an embodiment, an average thickness of the protective layer may be 1 µm to 20 µm.

A method for preparing a lithium metal electrode according to another embodiment of the present invention includes forming a coating layer on at least one surface of a current collector using a coating composition including a lithiophilic component; forming a protective layer on a surface of the coating layer using a slurry including amorphous carbon and a silicate clay mineral having a 2:1 layered crystal structure; positioning the current collector on which the coating layer and the protective layer are formed in a plating solution, and then positioning a lithium supply source at a predetermined interval from the protective layer; and applying current between the current collector and the lithium supply source to form a metal layer including a lithium alloy in which the lithiophilic component included in the coating layer and lithium precipitated from the lithium supply source are alloyed.

In an embodiment, in the forming of the protective layer, the amorphous carbon and the silicate clay mineral may be mixed at a weight ratio of 97:3 to 65:35. In an embodiment, in the forming of the metal layer including the lithium alloy in which the lithiophilic component included in the coating layer and lithium precipitated from the lithium supply source are alloyed by applying current between the current collector and the lithium supply source, the method may include electrodepositing at a maximum current density in a range of 8 mA/cm² to 12 mA/cm².

In an embodiment, in the forming of the metal layer including the lithium alloy in which the lithiophilic component included in the coating layer and lithium precipitated from the lithium supply source are alloyed by applying current between the current collector and the lithium supply source, the method may include electrodepositing such that a thickness of precipitated lithium is in a range of 5 µm to 15 µm.

In an embodiment, in the forming of the protective layer on the surface of the coating layer using the slurry including amorphous carbon and the silicate clay mineral having a 2:1 layered crystal structure, the method may include slurry-coating such that a thickness of the protective layer is 1 µm to 20 µm. In an embodiment, in the forming of the lithium metal layer on at least one surface of the current collector, a current density of current to be applied may be 0.1 mA/cm² to 100 mA/cm².

### [Advantageous Effects]

The lithium metal electrode for a lithium secondary battery according to an embodiment of the present invention includes a silicate clay mineral having a 2:1 layered crystal structure in the protective layer, thereby promoting lithium ion conduction, improving a lithium deposition rate, and realizing a lithium secondary battery having improved charge/discharge lifespan characteristics.

The method for preparing a lithium metal electrode for a lithium secondary battery according to another embodiment of the present invention includes coating a slurry in which a silicate clay mineral having a 2:1 layered crystal structure is mixed in the protective layer and inserting lithium by an electrodeposition process, thereby promoting lithium ion conduction, improving a lithium deposition rate, and realizing a lithium secondary battery having improved charge/discharge lifespan characteristics.

### [BRIEF DESCRIPTION OF THE DRAWINGS]

FIGS. 1A and 1B show a lithium metal electrode prepared according to an embodiment.
FIG. 2 is a schematic view of a method for preparing a lithium metal electrode according to the present invention.
FIG. 3 is a scanning electron microscope (SEM) image of a cross-section when an alloy-material coating layer is formed on a current collector according to an embodiment of the present invention.
FIG. 4A is a scanning electron microscope (SEM) image of a surface when an ion-concentrating protective layer is formed on a current collector coated with an alloy material according to an embodiment of the present invention, and FIG. 4B is a scanning electron microscope (SEM) image of a cross-section thereof.
FIG. 5 is a graph showing bonding strength between a current collector and an ion-concentrating protective layer according to Examples and Comparative Examples of the present invention.
FIGS. 6A and 6B are photographs comparing an electrodeposited appearance between a current collector and an ion-concentrating protective layer when electrodeposition is performed at a maximum current density according to an embodiment of the present invention, and FIG. 6C is a scanning electron microscope (SEM) image of a cross-sectional structure of a lithium metal layer formed on a lower surface of a protective layer by an electrodeposition process according to an embodiment of the present invention.
FIG. 7 is a graph evaluating cell lifespan of all-solid-state batteries using electrodes for lithium secondary batteries according to Examples and Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

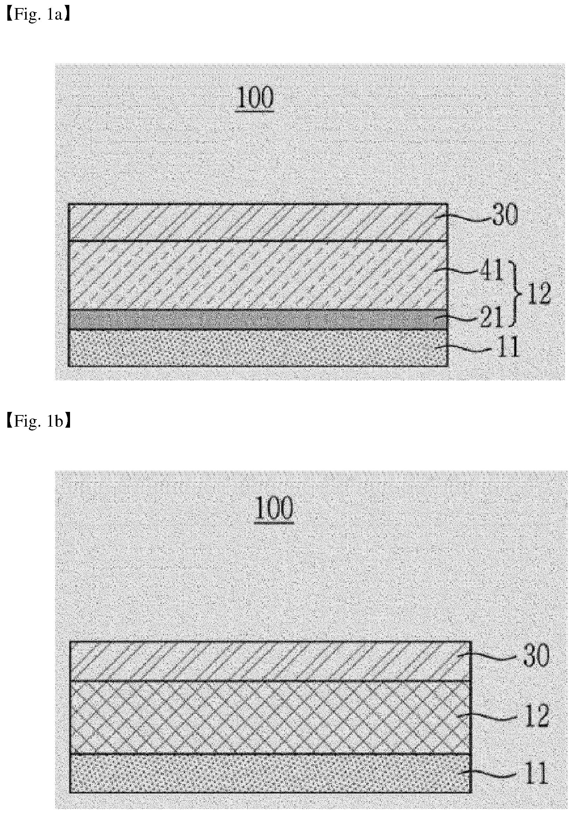

FIGS. 1A and 1B show a lithium metal electrode 100 prepared according to an embodiment.

Referring to FIG. 1A, the lithium metal electrode 100 according to an embodiment includes a current collector 11 and a metal layer 12 positioned on at least one surface of the current collector 11, and further includes a protective layer 30 positioned on the other surface of the metal layer 12 facing the current collector 11.

The current collector 11 may be a member for electrical connection in a lithium secondary battery. The current collector 11 may have the form of a foil, but is not limited thereto, and may have, for example, a form of a mesh, foam, rod, wire, or sheet woven from wires or fibers.

The current collector 11 may use a material having electrical conductivity and limited reactivity with lithium. Specifically, the material of the current collector 11 may be, for example, any one or a combination of copper, nickel, titanium, stainless steel, gold, platinum, silver, tantalum, ruthenium, alloys thereof, carbon, conductive polymers, and composite fibers in which a conductive layer is coated on a non-conductive polymer.

In an embodiment, the thickness of the current collector 11 may be 1 µm to 50 µm. When the thickness of the current collector 11 is excessively thick, the weight of the battery increases, thereby lowering energy density of the battery. When the thickness of the current collector 11 is excessively thin, there is a risk of overheating damage during high-current operation, and the current collector may be damaged by tension during a battery manufacturing process.

The metal layer 12 is positioned on the current collector 11, and may include a lithium alloy layer 21 including a lithium alloy and a lithium metal layer 41 positioned on the lithium alloy layer 21. The lithium alloy layer 21 may be a layer including a lithium alloy in which a lithiophilic component included in the coating layer of the current collector 11 and lithium precipitated from a lithium supply source are alloyed by applying current between the current collector 11 and the lithium supply source.

When an electrodeposition process is performed by applying a high current in order to increase the speed of electrodeposition when forming the metal layer 12, performance of a lithium secondary battery may be deteriorated. However, when the metal layer 12 is formed in a structure including the lithium alloy layer 21 including a lithium component as in the present embodiment, even when the electrodeposition process is performed by applying a high current, it is possible to prevent fine lithium particles from being generated in an excessive amount, or to prevent destruction of a film, which is a surface protective layer of a lithium metal layer already generated in the electrodeposition process.

Specifically, since the metal layer 12 according to an embodiment includes a lithium alloy layer including a lithium component, when a lithium metal layer is formed on the lithium alloy layer by applying a high current in the electrodeposition process, initially generated lithium particles are induced to grow well to form particles having a coarse structure, and at the same time, the lithium metal layer, and consequently the metal layer 12, may have a uniform surface.

Accordingly, performance of a secondary battery to which the lithium metal electrode according to the present embodiment is applied, specifically charge/discharge characteristics, can be remarkably improved. In addition, even when an electrodeposition process is performed at a high speed by applying a high current, a lithium metal electrode for a secondary battery having high performance can be prepared, and thus productivity of the lithium metal electrode for a secondary battery can also be remarkably improved.

The lithium alloy layer 21 may be an alloy formed of lithium and a lithiophilic metal, wherein the lithiophilic metal may be one or more selected from the group consisting of In, Ag, Sn, Zn, Si, Al, and Bi, but is not limited thereto.

In the present embodiment, the lithium alloy layer 21 includes a lithiophilic metal. When the lithium alloy layer 21 includes a lithiophilic metal as described above, the lithium alloy layer includes a lithiophilic metal having high electron conductivity, and thus electrons are smoothly supplied from the current collector 11 to reduce lithium ions, whereby electrodeposition of the lithium metal layer is easily performed. The metal layer 21 serves to help lithium be more effectively precipitated below the protective layer during charging of the battery.

In an embodiment, the thickness of the metal layer 12 may be in a range of 1 µm to 100 µm, more specifically 5 µm to 30 µm. When the thickness of the metal layer 12 is excessively thick, when the lithium metal electrode of the present embodiment is applied to a secondary battery, the weight and volume of the battery increase, thereby lowering energy density. In addition, since time and cost of the electrodeposition process increase in proportion to the thickness when forming the metal layer 12, the thickness of the metal layer 12 is preferably 100 µm or less.

When the thickness of the metal layer 12 is excessively thin, when the lithium metal electrode of the present embodiment is applied to a secondary battery, there is a problem in that the charge/discharge lifespan of the battery is deteriorated. Specifically, during charge and discharge of the battery, lithium in the battery is gradually consumed due to side reactions between lithium included in a negative electrode active material layer, that is, the metal layer of the present invention, and an electrolyte solution, and thus battery capacity is reduced. Since the amount of retained lithium capable of supplementing lithium consumed during charge and discharge is reduced, the charge/discharge lifespan of the battery is deteriorated. Accordingly, the thickness of the metal layer 12 is preferably 1 µm or more.

The protective layer 30 is positioned on the metal layer 12, and may include amorphous carbon and a silicate clay mineral. When lithium metal is used as a negative electrode in an all-solid-state battery, high resistance is generated by a reaction between an all-solid-state electrolyte and lithium, and lithium dendrites are continuously generated due to local non-uniformity of current density during charge and discharge, or high-resistance lithium by-products are generated, whereby failure occurs due to short circuit or overvoltage during charge and discharge, or battery capacity is reduced.

The lithium metal electrode according to an embodiment includes a protective layer including both amorphous carbon and a silicate clay mineral, thereby improving not only output characteristics and lifespan characteristics of the lithium metal electrode, but also structural safety.

Specifically, the lithium metal electrode of the present embodiment includes the protective layer 30 including amorphous carbon and a silicate clay mineral, thereby not only serving to improve ionic conductivity, but also improving strength of the protective layer and physically blocking dendrites when dendrites grow at the lithium electrode, thereby preventing short circuit between electrodes and improving charge/discharge lifespan.

The amorphous carbon may be one or more selected from the group consisting of acetylene black, Super P black, carbon black, Denka black, activated carbon, graphite, hard carbon, and soft carbon, but is not limited thereto.

In an embodiment, the amorphous carbon may have an average particle diameter of 10 nm to 100 nm. When the average particle diameter of the amorphous carbon exceeds the upper limit of the above-described range, there is a problem in that the contact area between the protective layer and electrodeposited lithium is reduced, and thus bonding strength is reduced. When the average particle diameter of the amorphous carbon is less than the lower limit of the above-described range, it is difficult to secure uniform dispersibility of the slurry of the protective layer.

The silicate clay mineral may be a self-lithium-ion-concentrating material. Specifically, the silicate clay mineral may have a large specific surface area, high ion exchange ability, and excellent adsorption performance. By including the above-described characteristics, the silicate clay mineral may serve not only to increase the concentration of lithium ions in the protective layer 30, but also to uniformize distribution of lithium ions.

Accordingly, as lithium ions uniformly move in the protective layer 30 and at the interface during charging of the battery, when lithium is precipitated below the protective layer 30, growth of lithium dendrites may be suppressed. When lithium ions are not uniformly moved in the protective layer 30 and at the interface, lithium dendrites may grow in a region where lithium ions are concentrated, causing a short circuit during operation of the battery.

The silicate clay mineral may have high strength and thus may serve as a filler in the protective layer 30. Since the protective layer 30 includes the silicate clay mineral, mechanical strength may be improved so that the protective layer is appropriately formed during the electrodeposition process of lithium, and growth of dendrites of the lithium negative electrode may be prevented during charge and discharge, thereby obtaining an effect of improving lifespan by preventing short circuit between electrodes.

The silicate clay mineral may have a 2:1 layered crystal structure. The 2:1 layered crystal structure may mean a bonded structure in which one octahedral layer is interposed between two tetrahedral layers. Specifically, the 2:1 layered crystal structure may be a structure in which, in a 1:1 layered structure, another anion surface of an octahedral layer not bonded to a tetrahedral layer is bonded by apical oxygen of another tetrahedral layer, and the apical oxygen substitutes 2/3 of hydroxide ions of the octahedral layer.

In an embodiment, the silicate clay mineral may have a layer charge per unit cell of 0.2 to 1.0. Specifically, the silicate clay mineral may have a layer charge per unit cell of 0.2 to 0.9. The layer charge per unit cell means a charge amount per unit structure of the clay mineral, and is generated by isomorphic substitution. When negative charge is generated by isomorphic substitution, charge balance may be maintained by cations present on surfaces between lattice layers. Specifically, the 2:1 layered crystal structure may satisfy a layer charge per unit cell of 0.2 to 1.0.

In an embodiment, the silicate clay mineral may satisfy a cation exchange capacity (me/100 g) of 80 to 150. Specifically, the cation exchange capacity may be 90 to 100. The cation exchange capacity means a total amount of cations adsorbed to a certain amount of soil in an exchangeable form with other cations by electrical attraction. Specifically, the cation exchange capacity means milliequivalents per 100 g of soil.

By satisfying the above-described ranges, bonding strength between the protective layer and the current collector may be increased, and lifespan characteristics may be excellent when applied to a battery. When the above-described ranges are not satisfied, there is a problem in that bonding strength between the protective layer and the current collector and lifespan characteristics of the battery are inferior.

In an embodiment, the silicate clay mineral may include a monoclinic crystal structure. The monoclinic crystal is one of seven crystal systems describing a crystal structure with three vectors. The three vectors have different lengths, four surfaces have a rectangular shape, two surfaces have a parallelogram shape, and among three angles formed by the three vectors, two are right angles and one, i.e., an angle forming the parallelogram, is not a right angle. Since the silicate clay mineral includes a monoclinic crystal structure, there is an advantage of improving the deposition rate of lithium.

In an embodiment, the silicate clay mineral may have an average particle diameter of 100 nm to 1,000 nm. When the average particle diameter of the silicate clay mineral exceeds the upper limit of the above-described range, large particles serve as a resistance layer, thereby lowering lithium ion conductivity. When the average particle diameter of the silicate clay mineral is less than the lower limit of the above-described range, there is a problem in that particle distribution of the clay mineral in the coating layer is non-uniform due to aggregation between primary particles.

In an embodiment, the silicate clay mineral may include at least one of montmorillonite, nontronite, beidellite, vermiculite, volkonskoite, hectorite, saponite, sauconite, sobockite, stevensite, glauconite, biotite, and svinfordite. The above-described silicate clay mineral may satisfy the above-described crystal structure, cation exchange capacity, and layer charge per unit cell.

As described above, since the silicate clay mineral satisfies the above-described characteristics, a large amount of lithium ions are adsorbed to the surface of the silicate clay mineral to increase the concentration of lithium ions, thereby promoting conduction of lithium ions and improving lifespan characteristics of a battery.

In addition, when a small amount of the silicate clay mineral is added to a liquid electrolyte, the concentration of lithium ions may be increased by high ion exchange ability and ion adsorption ability, thereby improving ionic conductivity in the liquid electrolyte. However, as in the present invention, since the silicate clay mineral is included in the protective layer 30, the silicate clay mineral not only serves to improve ionic conductivity, but also improves strength of the protective layer 30 and physically blocks dendrites when dendrites grow at a lithium negative electrode, thereby preventing short circuit between electrodes and improving charge/discharge lifespan.

The above-described material of the protective layer does not readily react with a sulfide-based electrolyte material of an all-solid-state battery and thus has excellent chemical stability, which is advantageous for improving interface stability and charge/discharge lifespan of the all-solid-state battery. The ion-conduction-promoting protective layer may be applied by preparing the composite in a slurry form, and a binder may be additionally included to prepare such a slurry.

In an embodiment, the protective layer 30 may have a weight ratio of amorphous carbon to silicate clay mineral of 97:3 to 65:35. Specifically, the weight ratio of amorphous carbon to silicate clay mineral may be 97:3 to 70:30.

When the content of the amorphous carbon in the protective layer 30 is excessively large, there is a problem in that effects depending on the content of the silicate clay mineral are insignificant. When the content of the silicate clay mineral in the protective layer 30 is excessively large, the silicate mineral serves as a barrier to lithium ion conduction rather than concentrating lithium ions, causing an increase in resistance and thus lowering lithium ion conductivity.

In an embodiment, the protective layer 30 may include a binder. The binder may be an aqueous binder, and the aqueous binder may be one or more selected from the group consisting of rubber-based binders selected from the group consisting of acrylonitrile-butadiene rubber, styrene-butadiene rubber (SBR), and acrylic rubber, and polymer resins such as hydroxyethyl cellulose, carboxymethyl cellulose, and polyvinylidene fluoride, but is not limited thereto.

Here, the binder may be added in an amount of 1 to 15 parts by weight, specifically 3 to 10 parts by weight, based on the weight of the slurry formed by mixing the amorphous carbon, the silicate clay mineral, and water.

When the content of the binder satisfies the above-described range, without causing a decrease in battery energy density due to an increase in weight and volume, particles constituting the protective layer may be efficiently bound to form a protective layer having excellent performance, thereby further improving lifespan characteristics of the secondary battery. When the content of the binder is excessively less than the above-described range, there is a problem in that bonding force between particles is reduced in forming the protective layer. When the content of the binder is excessively greater than the above-described range, not only is energy density reduced, but also resistance of the protective layer greatly increases, thereby interfering with lithium ion conduction.

In an embodiment, the thickness of the protective layer 30 may be 0.01 µm to 50 µm. Specifically, the thickness of the protective layer 30 may be in a range of 1 µm to 20 µm. When the thickness of the protective layer satisfies the above-described range, because of effects obtained by including the amorphous carbon and the silicate clay mineral, lithium dendrites may be prevented from being formed on the surface of the protective layer, and lithium ions may pass through and be conducted well inside the protective layer, whereby lithium may be precipitated on a lower surface of the protective layer.

When the thickness of the protective layer is excessively thin, there is a problem in that the protective layer cannot serve as a protective layer. When the thickness of the protective layer is excessively thick, resistance of the protective layer is too large, which may cause an increase in overvoltage during operation of a secondary battery, and there is a problem in that battery energy density is reduced due to an increase in weight and volume. However, the thickness of the protective layer may be variably adjusted according to the design of the secondary battery structure.

Although not shown, the metal layer 12 of the present embodiment may further include a film layer (SEI, solid-electrolyte interphase) positioned on the surface of the metal layer 12. The film layer is formed by a reaction between lithium metal of the electrodeposited lithium supply source and a plating solution during preparation of the metal layer 12, and the thickness, composition, characteristics, and the like of the film may be controlled by controlling the composition of the plating solution used and conditions of the electrodeposition process.

The thickness of the film layer may be 2 nm to 2 µm. Specifically, the thickness of the film layer may be in a range of 10 nm to 500 nm. When the thickness of the film layer positioned on the surface of the metal layer 12 is excessively thick, lithium ion conductivity decreases and interfacial resistance increases, resulting in deterioration of charge/discharge characteristics when applied to a battery. When the thickness of the film layer is excessively thin, the film layer may be easily lost in the process of applying the lithium metal electrode according to an embodiment to a battery. Accordingly, the film layer preferably has a thin thickness and is uniformly and densely formed over the entire surface of the metal layer 12 within a range satisfying the above thickness range.

In an embodiment, the film layer may include one or more materials selected from the group consisting of Li-N-C-H-O-based ionic compounds, Li-P-C-H-O-based ionic compounds, LiF, and Li₃N.

Referring to FIG. 1B, in an embodiment, the lithium metal electrode 100 includes the current collector 11 and the metal layer 12 positioned on at least one surface of the current collector 11 and formed by mixing lithium and a lithium alloy. Here, the lithium alloy may be formed by applying current between the current collector 11 and the lithium supply source so that the lithiophilic component included in the coating layer formed on the current collector 11 and lithium precipitated from the lithium supply source are alloyed.

The metal layer 12 may include a lithiophilic metal. Here, the lithiophilic metal may be, for example, one or more selected from the group consisting of In, Ag, Sn, Zn, Si, Al, and Bi, but is not limited thereto.

In an embodiment, the metal layer 12 includes a lithiophilic metal. When the metal layer 12 including a lithiophilic metal is formed as described above, since nucleation free energy can be reduced at the initial stage of lithium particle nucleation in the electrodeposition process, a lithium metal layer having a coarse particle structure can be formed even under high-current and overvoltage conditions.

In an embodiment, the thickness of the metal layer 12 may be in a range of 1 µm to 100 µm, more specifically 5 µm to 30 µm. When the metal layer 12 according to an embodiment satisfies the above thickness range, it is possible not only to improve charge/discharge lifespan of the battery and maximize energy density of the battery, but also to minimize time and cost of the electrodeposition process when forming the metal layer 12.

When the thickness of the metal layer is too thin, initial Coulombic efficiency is reduced due to initial irreversibility and surplus lithium is insufficient, and thus charge/discharge performance is deteriorated. When the thickness of the metal layer is too thick, not only is energy density of the battery reduced, but also process time and the amount of metal raw material used increase when forming the metal layer.

In an embodiment, the metal layer 12 includes the protective layer 30 positioned on the surface of the metal layer 12, and may further include a film layer. Detailed descriptions of the protective layer 30 and the film layer may refer to the contents described above with reference to FIG. 1A. In addition, although FIGS. 1A and 1B show that the metal layer 12 and the protective layer 30 are formed on one surface of the current collector 11, this is a non-limiting example, and cases in which they are symmetrically formed on both surfaces of the current collector 11 may also be included.

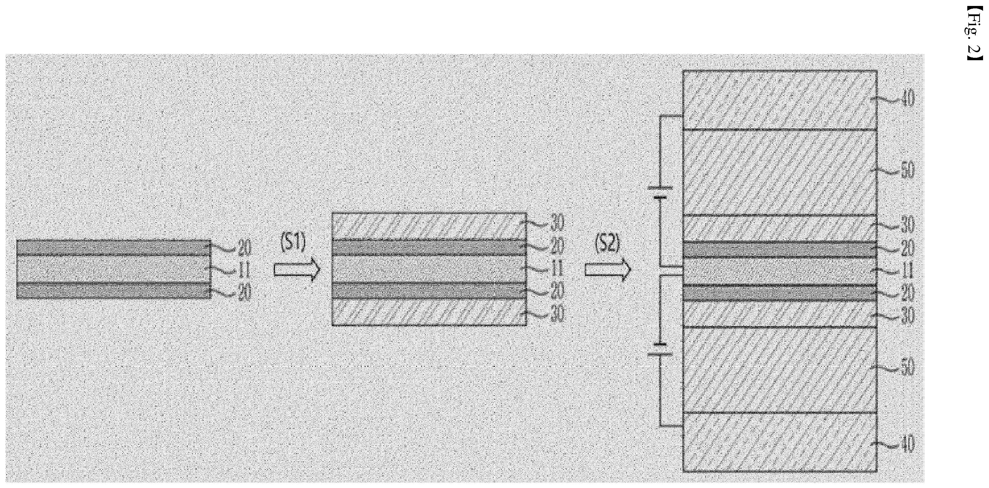

FIG. 2 is a schematic view of the method for preparing a lithium metal electrode according to the present invention.

Referring to FIG. 2, the method for preparing a lithium metal electrode according to an embodiment includes forming a coating layer on at least one surface of a current collector using a coating composition including a lithiophilic component; forming a protective layer on a surface of the coating layer using a slurry including amorphous carbon and a silicate clay mineral; positioning the current collector on which the coating layer and the protective layer are formed in a plating solution, and then positioning a lithium supply source at a predetermined interval from the protective layer; and applying current between the current collector and the lithium supply source to form a metal layer including a lithium alloy in which the lithiophilic component included in the coating layer and lithium precipitated from the lithium supply source are alloyed.

In the forming of the coating layer 20 on at least one surface of the current collector using the coating composition including a lithiophilic component, an alloy material may be coated on at least one surface of the current collector. Specifically, the coating layer 20 may be an alloy-material coating layer. The alloy material may be, for example, one or more selected from the group consisting of In, Ag, Sn, Zn, Si, Al, and Bi, but is not limited thereto.

In an embodiment, the forming of the coating layer 20 may be performed using at least one method selected from electrolytic plating, electroless plating, sputtering, electron beam deposition, and thermal vapor deposition. For example, the forming of the coating layer 20 may be performed by an electroless plating method.

Meanwhile, in the forming of the coating layer 20, the thickness of the alloy-material coating layer formed on at least one surface of the current collector may be 0.001 µm to 10 µm, specifically 0.01 µm to 1 µm, more specifically 150 nm to 400 nm, more specifically 200 nm to 400 nm, and more specifically 250 nm to 350 nm.

When the thickness of the coating layer 20 is excessively thin, it is insufficient to perform a role of forming a lithium alloy with lithium. When the thickness is excessively thick, a large amount of cost and time are consumed to form the alloy-material coating layer 20, and thus production efficiency and economic efficiency are reduced, and the weight and volume of the battery increase, thereby lowering energy density.

In the forming of the protective layer 30 on the surface of the coating layer using the slurry including amorphous carbon and the silicate clay mineral, a weight ratio of amorphous carbon to silicate clay mineral may be 97:3 to 65:35. Specifically, the weight ratio of amorphous carbon to silicate clay mineral may be 97:3 to 70:30. Detailed descriptions of the amorphous carbon and the silicate clay mineral and descriptions of the contents thereof may refer to the contents described above with reference to FIG. 1.

The protective layer 30 may be formed by applying a slurry formed by mixing the amorphous carbon, the silicate clay mineral, and a binder in water using at least one method selected from a doctor blade method, a dip method, a reverse roll method, a direct roll method, a gravure method, an extrusion method, and a brush coating method. The protective layer 30 may further include a binder, and a detailed description thereof may refer to the contents described above with reference to FIG. 1.

Meanwhile, in the forming of the protective layer 30, the thickness of the protective layer 30 formed on the surface of the coating layer 20 including the alloy material may be 0.01 µm to 50 µm, and more specifically in a range of 1 µm to 20 µm.

After the forming of the protective layer 30, a step of positioning the current collector on which the alloy-material coating layer 20 and the protective layer 30 are sequentially formed in a plating solution and then positioning a lithium supply source at a predetermined interval from the current collector 11, and a step of applying current between the current collector 11 and the lithium supply source to form the metal layer 12 are performed.

Specifically, after the current collector 11 on which the coating layer 20 and the protective layer 30 are formed is positioned in the plating solution, a lithium supply source 40 is positioned at a predetermined interval from the protective layer 30. The lithium supply source 40 may be, for example, lithium metal, a lithium alloy, a foil obtained by pressing the lithium metal or lithium alloy onto a current collector, a plating solution in which a lithium salt is dissolved, or the like.

The plating solution 50 may be prepared by dissolving a lithium salt in a non-aqueous solvent. Specifically, the lithium salt may be LiCl, LiBr, LiI, LiCO₃, LiNO₃, LiFSI, LiTFSI, LiBF₄, LiPF₆, LiAsF₆, LiClO₄, LiN(SO₂CF₃)₂, LiBOB, or a combination thereof. The concentration of the lithium salt may be 1.0 M to 3.0 M based on the total electrolyte solution.

Specifically, in the present embodiment, the plating solution is characterized by including a nitrogen-based compound as at least one of the lithium salt and the non-aqueous solvent. The nitrogen-based compound may include, for example, one or more selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as the lithium salt.

Among the nitrogen-based compounds, at least one of ε-caprolactam, N-methyl-ε-caprolactam, triethylamine, and tributylamine may be used as the non-aqueous solvent.

Meanwhile, the plating solution may additionally include a general non-aqueous solvent as a solvent in consideration of the viscosity of the plating solution. This is because, when the viscosity of the plating solution is excessively high, mobility of lithium ions decreases and ionic conductivity of the plating solution decreases, so that the time required for the electrodeposition process increases and productivity decreases.

The solvent may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

In the forming of the lithium metal layer on at least one surface of the current collector by applying current, a current density of current to be applied may be in a range of 0.1 mA/cm² to 100 mA/cm², more specifically in a range of 0.2 mA/cm² to 50 mA/cm², 5 mA/cm² to 30 mA/cm², or 7 mA/cm² to 25 mA/cm².

In an embodiment, the time for applying the current may be in a range of 0.05 hours to 50 hours, and more specifically in a range of 0.25 hours to 25 hours.

In an embodiment, the forming of the lithium metal layer 21 on at least one surface of the current collector 11 by applying current may be performed one or more times at different current densities. The step of applying current may be performed in multiple stages. Specifically, the step of applying current in multiple stages may be performed by increasing from a low current density to a high current density stepwise for a predetermined time. For example, the step of applying current may be performed by electrodeposition while increasing stepwise in the order of 0.1 mA/cm² to 0.3 mA/cm², 0.3 mA/cm² to 0.7 mA/cm², and 0.8 mA/cm² to 1.5 mA/cm².

In an embodiment, the forming of the lithium metal layer 21 on at least one surface of the current collector 11 by applying current may include electrodepositing at a maximum current density in a range of 8 mA/cm² to 12 mA/cm². Specifically, the maximum current density may be in a range of 8 mA/cm² to 10 mA/cm². The maximum current density means a limit of current density at which lithium electrodeposited in the electrodeposition process can be precipitated between the protective layer 30 and the current collector 11.

The electrodepositing at the maximum current density may be, for example, a step finally performed after a step of precipitating in multiple stages in order to precipitate lithium between the current collector 11 and the protective layer 30. As the maximum current density satisfies the above-described range, lithium is appropriately precipitated between the current collector 11 and the protective layer 30, and there are advantages in that lifespan characteristics of the battery and bonding strength between the current collector 11 and the protective layer 30 are excellent.

When the maximum current density exceeds the upper limit of the above-described range, lithium is precipitated on the surface of the protective layer 30, and thus there is a problem in that a target stabilized electrode structure cannot be secured. When the maximum current density is less than the lower limit of the above-described range, there is a problem of reduced productivity because the time during which lithium is electrodeposited increases.

In an embodiment, in the forming of the lithium metal layer 21 on at least one surface of the current collector 11 by applying current, the method may include electrodepositing such that the thickness of precipitated lithium is in a range of 5 µm to 15 µm. Specifically, the thickness of precipitated lithium may be electrodeposited in a range of 8 µm to 12 µm. The thickness of precipitated lithium may mean a height in a vertical direction of lithium disposed between the current collector 11 and the protective layer 30.

When the thickness of precipitated lithium exceeds the upper limit of the above-described thickness, not only is energy density of the battery reduced, but also process time and the amount of metal raw material used increase when forming the metal layer. When the thickness of precipitated lithium is less than the lower limit of the above-described thickness, initial Coulombic efficiency is reduced due to initial irreversibility and surplus lithium is insufficient, and thus charge/discharge performance is deteriorated.

In an embodiment, in the forming of the lithium metal layer on at least one surface of the current collector by applying current, the thickness of the metal layer including the lithium alloy may be controlled to be 1 µm to 100 µm. A detailed description of the thickness of the metal layer may refer to the contents described above with reference to FIG. 1.

As described above, in the present embodiment, even under high-current conditions, generation of excessive fine lithium particles can be prevented, and initially generated lithium particles are induced to grow well, thereby preparing a lithium metal electrode in which a metal layer including a lithium metal layer having a coarse particle structure is formed. In addition, the metal layer prepared as described above also has excellent surface uniformity.

A lithium secondary battery according to another embodiment of the present invention includes a positive electrode, a negative electrode, and an electrolyte positioned between the positive electrode and the negative electrode. Here, the negative electrode may be the lithium metal electrode according to the present invention.

In an embodiment, the lithium secondary battery may include an electrode assembly including a positive electrode including a positive electrode active material, a negative electrode which is the lithium metal electrode of the present invention, and a separator disposed between the positive electrode and the negative electrode. Such an electrode assembly may be wound or folded and accommodated in a battery case.

Thereafter, an electrolyte may be injected into the battery case and sealed to complete a secondary battery. In this case, the battery case may have a cylindrical, prismatic, pouch, coin, or other shape.

The positive electrode may include a positive electrode active material layer and a positive electrode current collector. The positive electrode active material layer may include, for example, a Li compound including at least one metal selected from Ni, Co, Mn, Al, Cr, Fe, Mg, Sr, V, La, and Ce, and at least one non-metal element selected from the group consisting of O, F, S, P, and combinations thereof.

In an embodiment, a conductive material may be further added to the positive electrode active material layer. The conductive material may be, for example, carbon black, ultrafine graphite particles, fine carbon such as acetylene black, nano-metal particle paste, or the like, but is not limited thereto.

The positive electrode current collector serves to support the positive electrode active material layer. As the positive electrode current collector, for example, aluminum foil, nickel foil, or a combination thereof may be used, but the positive electrode current collector is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate and a solvent such as ethylene carbonate, propylene carbonate, or butylene carbonate. In addition, as the solid electrolyte, for example, a gel polymer electrolyte in which an electrolyte solution is impregnated in a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator may be used as long as it is commonly used in lithium secondary batteries. Specifically, a separator having low resistance to ion movement of an electrolyte and excellent electrolyte solution impregnation ability may be used. The separator may be, for example, selected from glass fiber, polyester, polyethylene, polypropylene, polytetrafluoroethylene, or a combination thereof, and may be in the form of a nonwoven fabric or woven fabric. Meanwhile, when a solid electrolyte is used as the electrolyte, the solid electrolyte may also serve as the separator.

Hereinafter, embodiments of the present invention will be described in detail. However, these are provided as examples, and the present invention is not limited thereto, and the present invention is only defined by the scope of the claims to be described below.

### <Experimental Example>

### Preparation of Negative Electrode for Lithium Secondary Battery

### <Example 1>

### <Formation of Alloy-Material Coating Layer>

A lithium metal electrode for a lithium secondary battery according to an embodiment of the present invention was prepared by forming a coating layer 20 including an alloy material on a current collector, forming a lithium-ion-concentrating protective layer thereon, and then forming lithium or a lithium alloy layer between the current collector and the protective layer through an electrodeposition method.

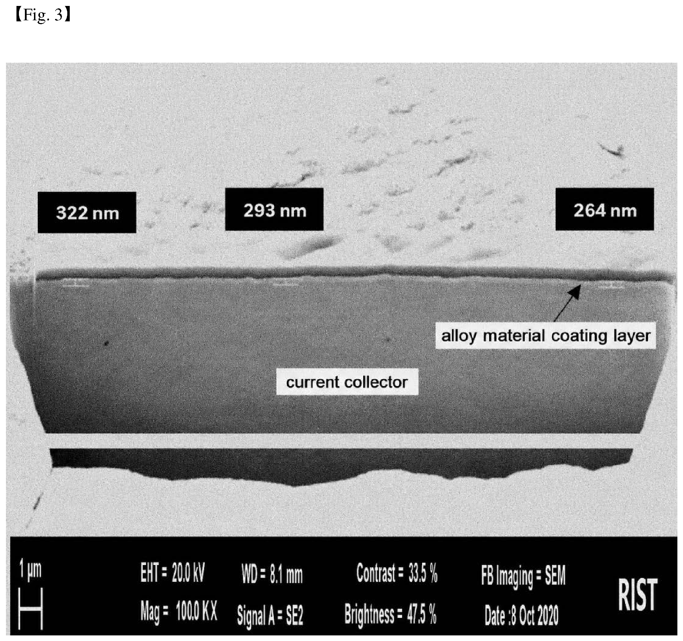

FIG. 3 is a scanning electron microscope (SEM) image of a cross-section when an alloy-material coating layer is formed on a current collector according to an embodiment of the present invention.

Referring to FIG. 3, in order to prepare a lithium metal electrode for a lithium secondary battery according to an embodiment of the present invention, an alloy-material coating layer including silver (Ag) was formed on both surfaces of a copper current collector to a thickness of about 300 nm by an electroless plating method.

### <Formation of Ion-Concentrating Protective Layer>

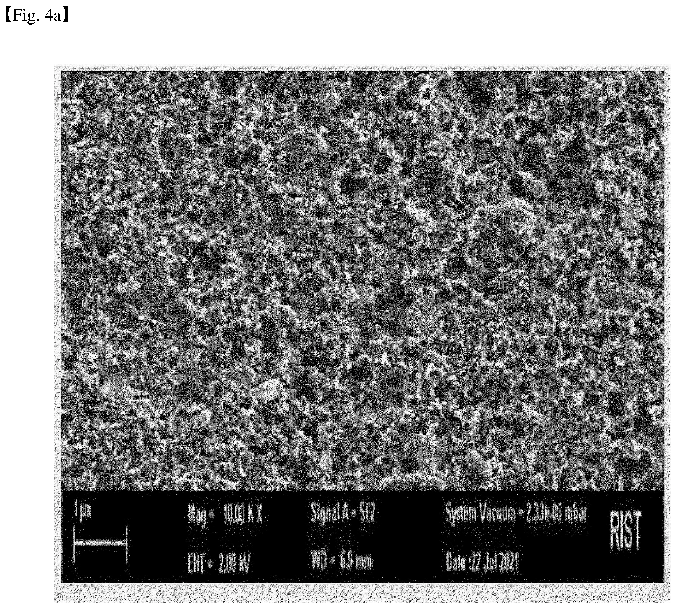

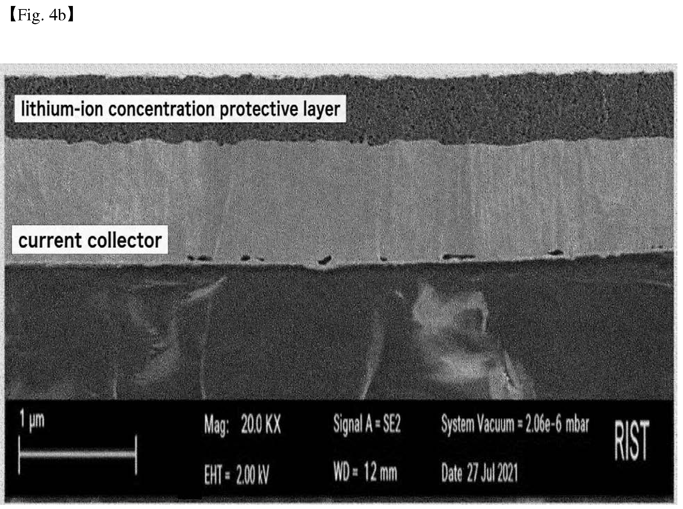

FIG. 4A is a scanning electron microscope (SEM) image of a surface when the protective layer 30 of the present invention, which is an ion-concentrating protective layer, is formed on a current collector coated with an alloy material according to an embodiment of the present invention, and FIG. 4B is a scanning electron microscope (SEM) image of a cross-section thereof.

Referring to FIGS. 4A and 4B, a lithium-ion-concentrating protective layer having a thickness of about 5 µm was formed by slurry coating using a comma coater on a copper current collector on which an alloy-material coating layer including silver was formed. Specifically, in the lithium-ion-concentrating protective layer, acetylene black, which is amorphous carbon, and montmorillonite (MMT), which is a clay-type mineral, were mixed, and the weight ratio thereof was 90:10. The slurry used water as a solvent, and was additionally prepared by adding 3.0 wt% each of carboxymethyl cellulose (CMC) and styrene-butadiene rubber (SBR) binders.

### <Lithium Electrodeposition Process>

Thereafter, in order to form a lithium alloy or pure lithium metal between the ion-concentrating protective layer and the current collector, lithium was removed from a lithium supply source using an electrodeposition process and precipitated between the ion-concentrating protective layer and the current collector. The plating solution used for such electrodeposition was prepared by adding lithium bis(fluorosulfonyl)imide, which is a nitrogen-based compound, and lithium nitrate to a 1,2-dimethoxyethane solvent in amounts of 40 wt% and 5 wt%, respectively, based on 100 wt% of the plating solution, and adding fluoroethylene carbonate, which is a fluorine-based compound, in an amount of 5 wt% based on 100 wt% of the plating solution. As a lithium supply source, a lithium metal plate having a purity of 99.9% or more and a thickness of 500 µm was pressed onto a copper current collecting plate (Cu plate) and used.

After the lithium supply source and the current collector were stacked in the plating solution in an electrically insulated state, lithium was precipitated between the current collector and the ion-concentrating protective layer by applying current using a power supply device with the lithium supply source and the current collector as (+) and (-) electrodes, respectively.

The current density of the electrodeposition process was increased stepwise in the order of 0.2 mA/cm², 0.5 mA/cm², and 1 mA/cm², and electrodeposition was performed for 5 minutes each, followed by a maximum current density of 10 mA/cm². The electrodeposition time at the maximum current density was variably set according to the size of the maximum current density by calculating the time during which a final cumulative lithium thickness of 10 µm could be electrodeposited.

### <Example 2>

A lithium metal electrode was prepared in the same manner as in Example 1, except that, in the forming of the ion-concentrating protective layer, the weight ratio of amorphous carbon to montmorillonite as an additive was 30:70, and the maximum electrodeposition current in the lithium electrodeposition process was 8 mA/cm².

### <Example 3>

A lithium metal electrode was prepared in the same manner as in Example 1, except that, in the forming of the ion-concentrating protective layer, nontronite was added as an additive in addition to montmorillonite, and the maximum electrodeposition current in the lithium electrodeposition process was 8 mA/cm².

### <Example 4>

A lithium metal electrode was prepared in the same manner as in Example 1, except that, in the forming of the ion-concentrating protective layer, vermiculite was added as an additive in addition to montmorillonite, and the maximum electrodeposition current in the lithium electrodeposition process was 8 mA/cm².

### <Example 5>

A lithium metal electrode was prepared in the same manner as in Example 1, except that, in the forming of the ion-concentrating protective layer, the weight ratio of amorphous carbon to montmorillonite as an additive was 3:97.

### <Comparative Example 1>

A lithium metal electrode was prepared in the same manner as in Example 1, except that, in the forming of the ion-concentrating protective layer, montmorillonite was not added as an additive, only amorphous carbon was used at 100 wt%, and the maximum electrodeposition current in the lithium electrodeposition process was 6 mA/cm².

### <Comparative Example 2>

A lithium metal electrode was prepared in the same manner as in Example 1, except that, in the forming of the ion-concentrating protective layer, kaolinite was added as an additive in addition to montmorillonite, and the maximum electrodeposition current in the lithium electrodeposition process was 4 mA/cm².

### <Comparative Example 3>

A lithium metal electrode was prepared in the same manner as in Example 1, except that, in the forming of the ion-concentrating protective layer, chlorite was added as an additive in addition to montmorillonite, and the maximum electrodeposition current in the lithium electrodeposition process was 4 mA/cm².

### <Comparative Example 4>

A lithium metal electrode was prepared in the same manner as in Example 1, except that, in the forming of the ion-concentrating protective layer, the weight ratio of amorphous carbon to montmorillonite as an additive was 1:99, and the maximum electrodeposition current was 6 mA/cm².

### <Comparative Example 5>

A lithium metal electrode was prepared in the same manner as in Example 1, except that, in the forming of the ion-concentrating protective layer, the weight ratio of amorphous carbon to montmorillonite as an additive was 40:60, and the maximum electrodeposition current was 4 mA/cm².

### <Comparative Example 6>

A lithium metal electrode was prepared in the same manner as in Example 1, except that the maximum electrodeposition current in the lithium electrodeposition process was 15 mA/cm².

### Preparation of All-Solid-State Battery

All-solid-state batteries were manufactured by applying the negative electrodes prepared according to the above-described Examples and Comparative Examples, and charge/discharge lifespan was evaluated. For evaluation of all-solid-state battery cells, a pressurized dedicated evaluation cell of Teraleder capable of maintaining an inert atmosphere was used. To manufacture the all-solid-state battery cell, a sulfide-based argyrodite (Li₆P₅Cl) solid electrolyte was used as an electrolyte, and the electrolyte was formed in a pellet form to have a thickness of about 0.7 mm. In order to secure a dense electrolyte, pressure was applied at 370 MPa.

Lithium having a thickness of 0.5 mm was attached to one surface of the electrolyte as a reference electrode, and the negative electrode prepared according to each of the Examples and Comparative Examples was attached to the opposite surface. The reference electrode and the evaluation electrode were pressed at a pressure of 50 MPa.

Lithium having a thickness of 0.5 mm was attached to one surface of the electrolyte as a reference electrode, and the negative electrode prepared according to each of the Examples and Comparative Examples was attached to the opposite surface.

### <Evaluation Example 1>

Table 1 below shows bonding strength between the current collector and the protective layer according to whether montmorillonite is added as an additive in the ion-concentrating protective layer and the content thereof. Bonding strength between the current collector and the protective layer, maximum current density, and the number of charge/discharge performance cycles were measured.

Bonding strength between current collector and protective layer: After the above-described forming of the ion-concentrating protective layer, bonding strength between the coating layer 20 and the current collector 11 was measured using a peel strength tester. Specifically, a polyimide tape (No. 360A, thickness: 0.08 mm, adhesion: 4.4 N/19 mm) of Nitto having a width of 10 mm was brought into close contact with the protective layer, and then bonding strength was measured through a tensile test using a peel strength tester (AND, MCT-2150 W). In this case, the tensile speed was 50 mm/min, and the tensile test distance was set to a total of 200 mm or less. The bonding strength was obtained as an average strength over a 100 mm section from a point corresponding to 50 mm in the tensile test.

Maximum current density (mA/cm²): The maximum current density means a limit of current density at which lithium electrodeposited according to the above process can be precipitated between the ion-concentrating protective layer and the current collector, and the maximum current density was measured.

Number of charge/discharge performance cycles: The reference electrode and the evaluation electrode were attached to the solid electrolyte at a pressure of 50 MPa, and during charge/discharge evaluation, pressure was applied at 16 MPa in a dedicated evaluation cell. Charge/discharge evaluation was performed by defining charging at a constant current of 2 mA/cm² for 0.5 hours and discharging at a constant current of 2 mA/cm² for 0.5 hours as one cycle. The charge/discharge lifespan was defined as ending when a short circuit occurred between the reference electrode and the evaluation electrode during charge/discharge or when the voltage between both electrodes exceeded 2 V.

**[Table 1]**

| Classification | Additive [wt%] | Amorphous Carbon [wt%] | Type of Additive | Sheet Bonding Strength [N/cm] | Number of Charge/Discharge Performance Cycles [cycles] |
|---|---|---|---|---|---|
| Example 1 | 10 | 90 | MMT | 0.059 | 872 |
| Example 2 | 30 | 70 | MMT | 0.272 | 744 |
| Comparative Example 1 | 0 | 100 | - | 0.009 | 418 |

Referring to Table 1, it was confirmed that Examples 1 and 2 in which montmorillonite was added had excellent bonding strength between the current collector and the ion-concentrating protective layer compared to Comparative Example 1 in which the protective layer was formed only of amorphous carbon without addition of montmorillonite. In addition, when Example 1 and Example 2 were compared, it was confirmed that, as the content of the additive increased, bonding strength between the current collector and the ion-concentrating protective layer was excellent.

In addition, looking at the number of charge/discharge performance cycles of the lithium negative electrode in comparison with Examples 1 and 2, it can be confirmed that Examples 1 and 2 are superior to Comparative Example 1.

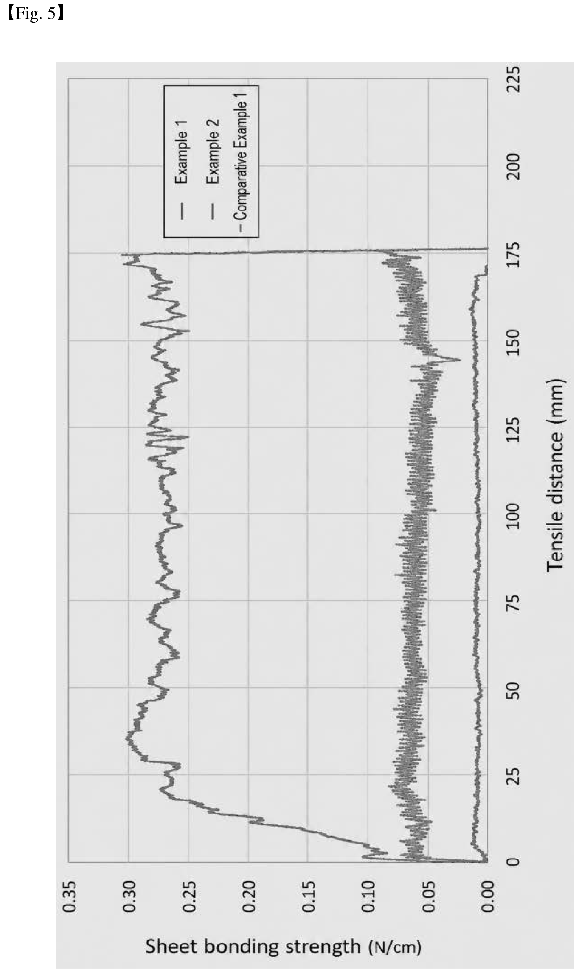

FIG. 5 is a graph showing bonding strength between the current collector and the ion-concentrating protective layer according to Examples and Comparative Examples of the present invention.

Referring to FIG. 5, it can be confirmed that Example 1 and Example 2 of the present invention, in which montmorillonite was added in amounts of 10 wt% and 30 wt%, respectively, have higher bonding strength compared to Comparative Example 1 in which the protective layer was formed only of amorphous carbon without addition of montmorillonite. Specifically, referring to Examples 1 and 2, it can be confirmed that bonding strength increases as the content of montmorillonite increases.

### <Evaluation Example 2> - Control of Additive Type and Maximum Current Density

Table 1 below shows bonding strength between the current collector and the protective layer, maximum current density, and the number of charge/discharge performance cycles according to the type and characteristics of the additive in the ion-concentrating protective layer.

**[Table 2]**

| Classification | [wt%] | Amorphous Carbon [wt%] | Additive | | | | | | Sheet Bonding Strength [N/cm] | Maximum Current Density [mA/cm²] | Number of Charge /Discharge Performance Cycles [cycles] |
|---|---|---|---|---|---|---|---|---|---|---|---|
| | | | Type | Layer Type | Swelling | Crystal Structure | Layer Charge per Unit Cell (X) | Cation Exchange Capacity (me/100 g) | | | |
| Example 1 | 10 | 90 | MMT | 2:1 | Swelling lattice | Monoclinic | 0.2~0.6 | 80~150 | 0.059 | 10 | 872 |
| Example 3 | 10 | 90 | Nontronite | 2:1 | Swelling lattice | Monoclinic | 0.2~0.6 | 80~150 | 0.055 | 8 | 826 |
| Example 4 | 10 | 90 | Vermiculite | 2:1 | Swelling lattice | Monoclinic | 0.6~0.9 | 80~150 | 0.063 | 8 | 730 |
| Comparative Example2 | 10 | 90 | Kaolinite | 1:1 | Non-swelling lattice | Triclinic | 0 | 3-15 | 0.052 | 4 | 328 |
| Comparative Example3 | 10 | 90 | Chlorite | Mixed-layer type | - | Trigonal | - | 10~40 | 0.061 | 4 | 394 |

Referring to Table 2, it was confirmed that Comparative Examples 2 and 3 using kaolinite and chlorite were inferior in maximum current density and number of charge/discharge performance cycles compared to Examples 1, 3, and 4 using montmorillonite, nontronite, and vermiculite as additives.

### <Evaluation Example 3> - Evaluation According to Additive Content and Maximum Current Density

Table 3 below shows bonding strength between the current collector and the protective layer, maximum current density, and the number of charge/discharge performance cycles of a battery according to the content of amorphous carbon and the content of the additive in the ion-concentrating protective layer.

**[Table 3]**

| Classification | Additive [wt%] | Amorphous Carbon [wt%] | Type of Additive | Sheet Bonding Strength [N/cm] | Maximum Current Density [mA/cm²] | Number of Charge/Discharge Performance Cycles [cycles] |
|---|---|---|---|---|---|---|
| Example 1 | 10 | 90 | MMT | 0.059 | 10 | 872 |
| Example 5 | 3 | 97 | MMT | 0.035 | 10 | 912 |
| Example 2 | 30 | 70 | MMT | 0.272 | 8 | 744 |
| Comparative Example 4 | 1 | 99 | MMT | 0.015 | 6 | 583 |
| Comparative Example 5 | 40 | 60 | MMT | 0.302 | 4 | 558 |
| Comparative Example 6 | 10 | 90 | MMT | 0.059 | 15 | 346 |

Referring to Table 3, it was confirmed that Comparative Example 4, in which the additive content was excessively low, had inferior bonding strength and number of charge/discharge performance cycles compared to Examples 1, 5, and 6 in which the additive content was included in the range of the present invention. It was confirmed that Comparative Example 5, in which the additive content was excessively high, had inferior electrodepositable maximum current density and number of charge/discharge performance cycles compared to Examples 1, 5, and 6.

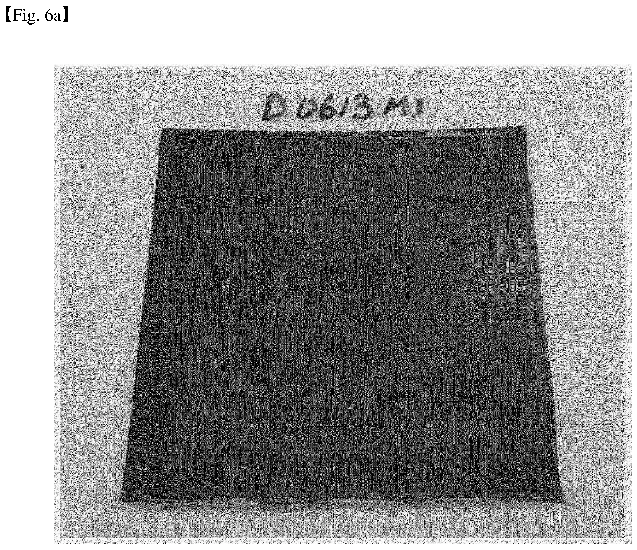

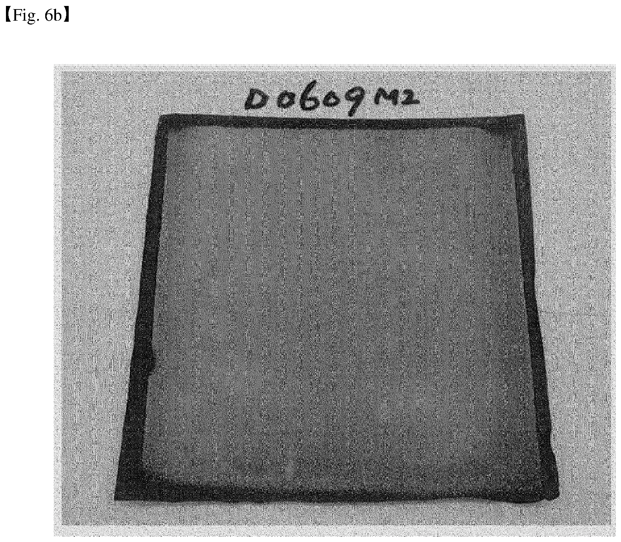

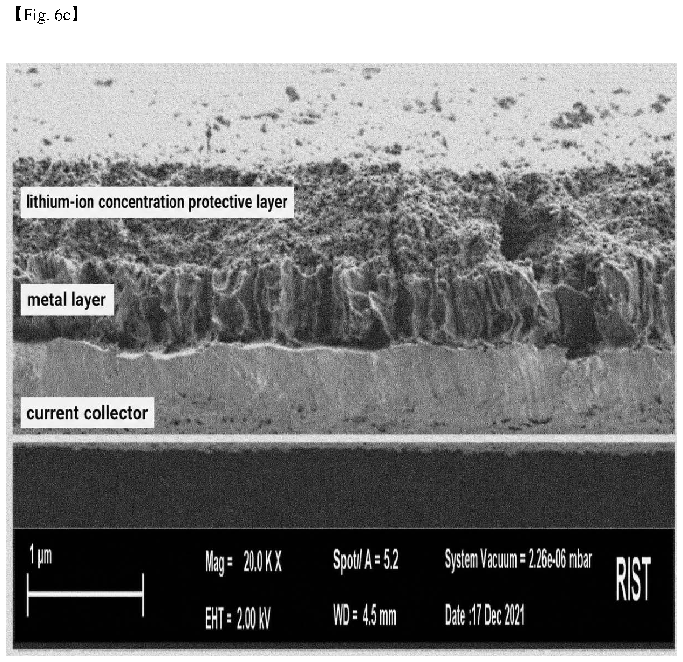

FIGS. 6A and 6B are photographs comparing an electrodeposited appearance between the current collector and the ion-concentrating protective layer when electrodeposition is performed at a maximum current density according to an embodiment of the present invention, and FIG. 6C is a scanning electron microscope (SEM) image of a cross-sectional structure of a lithium metal layer formed on a lower surface of the protective layer by an electrodeposition process according to an embodiment of the present invention.

FIG. 6A is a photograph showing the appearance after electrodeposition in Example 1, in which lithium is precipitated between the current collector and the ion-concentrating protective layer when electrodeposition is performed at the maximum current density. FIG. 6B compares and shows the appearance when lithium is deposited on the ion-concentrating protective layer when electrodeposition is performed at a current density exceeding the maximum current density.

When electrodeposition is performed at or below the electrodepositable maximum current density, lithium to be precipitated is deposited below the black protective layer as shown in FIG. 6C, and thus the black protective layer is visible in appearance. When electrodeposition is performed at a current density exceeding this, as in Comparative Example 6, lithium is deposited on the upper surface of the protective layer, and it was confirmed that gray lithium was electrodeposited on the upper surface of the protective layer.

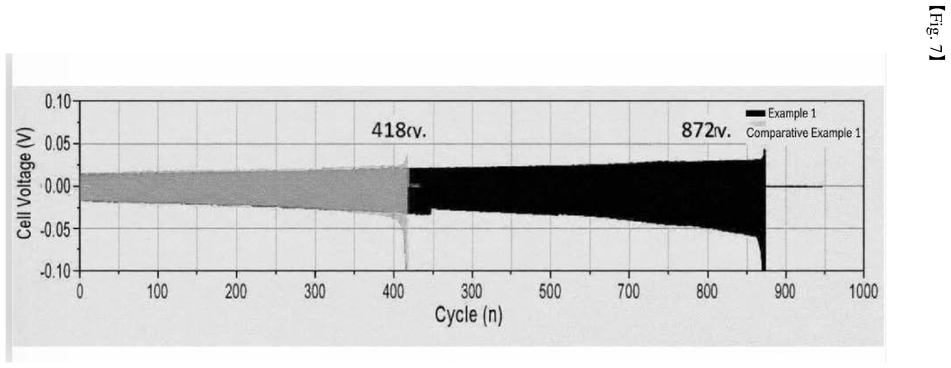

FIG. 7 is a graph evaluating cell lifespan of all-solid-state batteries using electrodes for lithium secondary batteries according to Examples and Comparative Examples of the present invention.

Referring to FIG. 7, when evaluating all-solid-state battery cell lifespan of Example 1 and Comparative Example 1, it was confirmed that the cell lifespan characteristics of Example 1 were superior to those of Comparative Example 1.

The present invention is not limited to the above Examples, and may be prepared in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A lithium metal electrode, comprising:
a current collector;
a metal layer positioned on at least one surface of the current collector and comprising lithium or a lithium alloy; and
a protective layer positioned on the metal layer,
wherein the protective layer comprises amorphous carbon and a silicate clay mineral having a 2:1 layered crystal structure.

2. The lithium metal electrode of claim 1,
wherein the protective layer has a weight ratio of the amorphous carbon to the silicate clay mineral of 97:3 to 65:35.

3. The lithium metal electrode of claim 1,
wherein the silicate clay mineral comprises monoclinic crystals.

4. The lithium metal electrode of claim 1,
wherein the silicate clay mineral has a layer charge per unit cell of 0.2 to 0.6.

5. The lithium metal electrode of claim 1,
wherein the silicate clay mineral has a cation exchange capacity (me/100 g) of 80 to 150.

6. The lithium metal electrode of claim 1,
wherein a bonding strength between the current collector and the protective layer is 0.030 N/cm to 0.30 N/cm.

7. The lithium metal electrode of claim 1,
wherein the metal layer comprising the lithium alloy is a composite layer comprising one or more of In, Ag, Sn, Zn, Si, Al, and Bi.

8. The lithium metal electrode of claim 1,
wherein an average thickness of the metal layer is 1 µm to 100 µm.

9. The lithium metal electrode of claim 1,
wherein an average thickness of the protective layer is 1 µm to 20 µm.

10. A method for preparing a lithium metal electrode, comprising:
forming a coating layer on at least one surface of a current collector using a coating composition comprising a lithiophilic component;
forming a protective layer on a surface of the coating layer using a slurry comprising amorphous carbon and a silicate clay mineral having a 2:1 layered crystal structure;
positioning the current collector on which the coating layer and the protective layer are formed in a plating solution, and then positioning a lithium supply source at a predetermined interval from the protective layer; and
applying current between the current collector and the lithium supply source to form a metal layer comprising a lithium alloy in which the lithiophilic component included in the coating layer and lithium precipitated from the lithium supply source are alloyed.

11. The method for preparing a lithium metal electrode of claim 10,
wherein, in the forming of the protective layer, the amorphous carbon and the silicate clay mineral are mixed at a weight ratio of 97:3 to 65:35.

12. The method for preparing a lithium metal electrode of claim 10,
wherein, in the forming of the metal layer comprising the lithium alloy in which the lithiophilic component included in the coating layer and lithium precipitated from the lithium supply source are alloyed by applying current between the current collector and the lithium supply source,
the method comprises electrodepositing at a maximum current density in a range of 8 mA/cm² to 12 mA/cm².

13. The method for preparing a lithium metal electrode of claim 10,
wherein, in the forming of the metal layer comprising the lithium alloy in which the lithiophilic component included in the coating layer and lithium precipitated from the lithium supply source are alloyed by applying current between the current collector and the lithium supply source,
the method comprises electrodepositing such that a thickness of precipitated lithium is in a range of 5 µm to 15 µm.

14. The method for preparing a lithium metal electrode of claim 10,
wherein, in the forming of the protective layer on the surface of the coating layer using the slurry comprising amorphous carbon and the silicate clay mineral having a 2:1 layered crystal structure,
the method comprises slurry-coating such that a thickness of the protective layer is 1 µm to 20 µm.

15. The method for preparing a lithium metal electrode of claim 10,
wherein, in the forming of the lithium metal layer on at least one surface of the current collector, a current density of current to be applied is 0.1 mA/cm² to 100 mA/cm².
